# EUROPÄISCHE PATENTSCHRIFT

(11) **EP 1 920 176 B1**
(45) Veröffentlichungstag und Bekanntmachung des Hinweises auf die Patenterteilung: **18.03.2009**
(21) Anmeldenummer: 06791674.2
(22) Anmeldetag: 25.08.2006
(51) Int. Cl.: F16J 15/00, F16J 15/32, F16J 15/54, F16C 33/78, F16C 19/16

(54) **WINDENERGIEANLAGE MIT ELEMENT ZUM ABDICHTEN ZWEIER GEGENEINANDER VERDREHBARER TEILE**
WIND TURBINE WITH ELEMENT FOR SEALING TWO PARTS THAT CAN BE ROTATED IN RELATION TO ONE ANOTHER
DISPOSITIF D'EOLIENNE AVEC ELEMENT POUR ASSURER L'ETANCHEITE ENTRE DEUX PIECES POUVANT ETRE MISES EN ROTATION L'UNE PAR RAPPORT A L'AUTRE

(30) Priorität: 01.09.2005 DE 102005041720
(43) Veröffentlichungstag der Anmeldung: 14.05.2008
(73) Patentinhaber: IMO Momentenlager GmbH, 91350 Gremsdorf (DE)
(72) Erfinder: RUSS, Erich, 91350 Gremsdorf (DE); HUBERTUS, Frank, 91315 Höchstadt (DE); WILLACZEK, Hermann, 91334 Hemhofen (DE)
(74) Vertreter: Küchler, Stefan
(86) Internationale Anmeldenummer: PCT/EP2006/008373
(87) Internationale Veröffentlichungsnummer: WO 2007/025683

(56) Entgegenhaltungen:
- EP-A- 0 959 258
- JP-A- 6 026 077
- US-A- 3 011 814
- US-A- 3 652 141
- US-A- 4 283 063
- US-A- 4 921 260

## Beschreibung

Die Erfindung richtet sich auf eine Windenergieanlage gemäß dem Oberbegriff des Anspruchs 1.

Handelsübliche Dichtungen bestehen zumeist aus einem Ring aus einem elastischen Werkstoff, der an einem der beiden gegeneinander verdrehbaren Teile festgelegt ist und eine Dichtlippe aufweist, die gegen eine Fläche an dem anderen der beiden gegeneinander verdrehbaren Teile dichtend angepreßt wird. Damit sich diese Dichtlippe nicht vorzeitig abnützt, sollte die Anlagefläche möglichst glatt sein. Üblicherweise wird hierfür ein spanabhebend bearbeiteter und/oder polierter Oberflächenbereich des betreffenden Drehteils verwendet, der ggf. noch durch einen Fettfilm vor Korrosion geschützt ist. Diese Anordnung hat allerdings Nachteile:

Bei großen Lagern, insbesondere im Anlagenbau, bspw. bei einem Blattlager einer Windenergieanlage, aber auch in manchen medizintechnischen Geräten, ist das betreffende Drehteil oftmals so groß, dass es unwirtschaftlich ist, hierfür nichtrostenden Stahl zu verwenden. Die Verwendung einer rostenden Stahlsorte führt andererseits bei der Witterung ausgesetzten Lagern vergleichsweise schnell zu einer Korrosion. Denn ein schützender Fettfilm wird vom Regen schnell weggewaschen. Insbesondere im Bereich der Küste (Windenergieanlagen) oder gar auf hoher See (Schiffe) ist zudem die Luft wegen des Salzwassers sehr aggressiv. Sobald aber eine Korrosion einsetzt, wird die Dichtung durch die dadurch aufgerauhte Oberfläche beschädigt und schließlich zerstört.

Bei anderen Anwendungsfällen, bspw. im Bereich der Medizintechnik, ist ein Fettfilm wie auch der Austritt von Fett nicht zulässig, so dass auch hier ein Korrosionsschutz nicht gegeben ist und ohne Verwendung einer das betreffende Gerät nicht unwesentlich verteuernden, nichtrostende Stahlsorte eine Korrosion unvermeidlich wäre.

Außerdem können manche Lager nur mit hohem Aufwand gewartet werden, so dass es wünschenswert wäre, für solche Anwendungsfälle ein spezielles Dichtungselement zur Verfügung zu haben, das selbst bei Anlagen mit einer Lebenserwartung von 20 Jahren nicht gewartet werden muß.

DE 10 309 383 offenbart eine gattungsgemäße Windenergieanlage mit einer Dichtungsanordnung.

Aus den obigen Erwägungen resultiert das die Erfindung initiierende Problem, eine Dichtung zu schaffen, die auch unter rauhen oder gar aggressiven Umweltbedingungen und/oder ohne einen schützenden Fettfilm über einen möglichst langen Zeitraum hinweg möglichst verschleißfrei arbeitet.

Die Lösung dieses Problems gelingt bei einer gattungsgemäßen Dichtung in einer Windenergieanlage durch wenigstens einen zweiten Dichtungsring, der an dem anderen der gegeneinander verdrehbaren Teile fixiert ist und ein an seinem Umfang entlang laufendes Band aus einem anderen Werkstoff trägt, an dem wenigstens eine Dichtlippe des ersten Dichtungsrings anliegt.

Der zweite Dichtungsring dient nur als Träger für das als Anlagefläche für die gegenüberliegende Dichtlippe dienende Band und kann daher hinsichtlich seiner Materialauswahl optimal an diese Aufgabe angepaßt sein. Bspw. kann er eine höhere Elastizität aufweisen als das Dichtungs-Band, um Toleranzen der Bauteile auszugleichen. Die Montage und Fixierung des Dichtungs-Bandes wird erheblich erleichtert, was auch im Hinblick auf eine durchgehende Band-Oberfläche wichtig ist. Ferner kann das Dichtungs-Band relativ dünn sein, bspw. nur 0,5 bis 2 mm stark, und wegen seines geringen Gewichts läßt sich hierfür ein hochwertiger, verschleißarmer Werkstoff verwenden.

Es hat sich als günstig erwiesen, dass das Material des zweiten Dichtungsrings einen höheren spezifischen elektrischen Widerstand p aufweist als das Material des von diesem getragenen Bandes. Der zweite Dichtungsring ist bevorzugt aus einem elektrisch isolierenden Werkstoff, bspw. aus einem Material mit einem spezifischen elektrischen Widerstand p von mehr als 10³ Ωm, insbesondere von mehr als 10⁶ Ωm. Er sorgt daher dafür, dass das erfindungsgemäße Band zusammen mit dem betreffenden Drehteil kein chemisches Lokalelement ausbildet.

Besondere Vorteile erhält man dadurch, dass er erste und der zweite Dichtungsring aus dem selben Material gefertigt sind. Die Erfindung bevorzugt hierfür ein vulkanisiertes, d.h. vernetztes Material, bspw. vulkanisierten Kautschuk, weil dieser infolge der miteinander vernetzten Moleküle im Gegensatz zum unvernetzten Kautschuk nicht nur elastisch, sondern auch dauerelastisch ist. Dies resultiert daher, weil die beim unvernetzten Kautschuk spontan einsetzende, die anfänglich vorhandene Elastizität allmählich herabsetzende Nachvulkanisation weitgehend oder gar vollständig unterbleibt.

Weitere Vorzüge bietet die Herstellung des Bandes aus Metall, insbesondere aus einem edlen oder veredelten Metall, bspw. Edelstahl. Aufgrund seiner vergleichsweise hohen Härte ist Metall relativ verschleißarm. Die Ausbildung von materialzerstörenden Lokalelementen kann durch die isolierende Fixierung auf dem zweiten Dichtungsring als Träger vermieden werden. Schließlich unterliegt edles oder veredeltes Metall keiner Korrosion.

Von großem Vorteil ist, dass das Material des Bandes einen geringeren Reibungskoeffizient µ aufweist als der zweite Dichtungsring selbst. Dadurch wird die Dichtlippe auch bei fehlendem Fettfilm geschont, was sich ebenfalls förderlich auf die erreichbare Betriebsdauer auswirkt. Eine Möglichkeit zur Reduzierung des Reibungskoeffizienten µ besteht darin, dass der als Anlagefläche für eine Dichtlippe des ersten Dichtungsrings dienende Oberflächenbereich des Bandes geglättet ist, bspw. poliert.

Ein möglichst reibungsarmes Gleiten der Dichtlippe entlang des erfindungsgemäßen Bandes wird weiterhin dadurch unterstützt, dass der als Anlagefläche für eine Dichtlippe des ersten Dichtungsrings dienende Oberflächenbereich des Bandes etwa einer Rotationsfläche folgt, insbesondere einer Zylindermantelfläche. Dadurch verteilt sich der Anpreßdruck der Dichtlippe gleichmäßig auf deren gesamten Umfang, es gibt keine Stellen mit erhöhtem Abrieb.

Indem das Band ringförmig geschlossen ist, erhält es einerseits die zur Minimierung des Verschleißes der daran entlang laufenden Dichtlippe erforderliche Rotationssymmetrie; andererseits ist eine ringförmige Struktur für die Festlegung des Bandes an dem zweiten Dichtungsring vorteilhaft. Eine ringförmige, d.h., zweifach zusammenhängende Struktur kann bspw. durch Verschweißen oder Verkleben der beiden stirnseitigen, vorzugsweise stumpf zusammenstoßenden Enden des Bandes erreicht werden, ggf. unter anschließendem Glätten bzw. Polieren der Fügestelle, insbesondere Schweißnaht bzw. Klebestelle. Je nach Bedarf kann das Zusammenfügen der Bandenden vor oder nach dem Zusammenbau mit dem betreffenden Dichtungsring erfolgen; die Erfindung bevorzugt jedoch ein Zusammenfügen der Bandenden vor dem Zusammenbau mit dem betreffenden Dichtungsring bzw. vor dem Einbau der Dichtung.

Dem selben Zweck, nämlich einer optimalen Rotationssymmetrie, dient ein konstanter Querschnitt des Bandes entlang von dessen gesamtem Umfang. Die Erfindung bevorzugt hierbei einen etwa rechteckigen Querschnitt, wobei die Dichtlippe des gegenüberliegenden Drehteiles an einer der breiteren Umfangsflächen eines solchen Bandes eine optimale Anlagefläche findet, während die Stärke lotrecht zu dieser Fläche möglichst gering sein kann, um dem Band eine gewisse Biegsamkeit zu verleihen.

In Anbetracht einer selbsttätigen Fixierung des Bandes empfiehlt es sich, dieses - unter Verwendung des zweiten Dichtungsrings - an einer vorzugsweise etwa zylindrischen Mantelfläche des betreffenden Drehteils festzulegen, wo eine Fixierung allein aufgrund geometrischer Gegebenheiten erreicht wird, so dass die Verwendung von Klebstoff überflüssig ist.

Besonders eignet sich hierfür eine konvex gewölbte Außenmantelfläche des betreffenden Drehteils, die von dem erfindungsgemäßen Band - zusammen mit dem dazwischen angeordneten, zweiten Dichtungsring - wie von einem Gürtel umschlungen werden kann und diesem dabei einen optimalen Halt gibt.

Da auch kleinste Berührungspunkte zwischen einem erfindungsgemäßen, metallischen Band und einem ebenfalls metallischen Drehteil zu einem Lokalelement führen können, sollte das umlaufende Band derart an dem zweiten Dichtungsring fixiert sein, dass keinerlei Kontakt zu irgendeinem der beiden gegeneinander verdrehbaren Teile besteht.

Um ein Wandern des erfindungsgemäßen Bandes zu vermeiden, kann dieses in einer umlaufenden, muldenförmigen Vertiefung des zweiten Dichtungsrings aufgenommen sein.

Wenn die Tiefe der das erfindungsgemäße Band aufnehmenden Mulde in dem zweiten Dichtungsring kleiner ist als die entsprechende, querschnittliche Höhe, d.h. Stärke, des darin eingelegten Bandes, so erhebt sich der als eigentliche Anlagefläche für die Dichtlippe des anderen Drehteils dienende Oberflächenbereich des erfindungsgemäßen Rings über die angrenzenden Oberflächenbereiche des zweiten Dichtungsrings. Selbst bei einem geringen Spiel zwischen den gegeneinander verdrehbaren Teilen ist damit eine dauerhafte Berührung zwischen der Dichtlippe an dem ersten Dichtungsring mit dem zweiten Dichtungsring ist damit ausgeschlossen und damit eine - reibungsbedingte - Beschädigung dieser Teile.

Von der Dichtlippe auf das erfindungsgemäße Band ausgeübte Druckkräfte wirken - ggf. gemeinsam mit von dem ringförmigen Band selbst erzeugten Fixierungskräften - auf die Bodenfläche einer das Band aufnehmenden Mulde in dem zweiten Dichtungsring ein. Um von dort an das betreffende Drehteil weitergegeben werden zu können, sollte der Boden der das umlaufende Band aufnehmenden Mulde in dem zweiten Dichtungsring etwa parallel zu demjenigen Oberflächenbereich desjenigen verdrehbaren Teils verlaufen, an welchem der zweite Dichtungsring festgelegt ist.

Das erfindungsgemäße Band wird in der Mulde des zweiten Dichtungsrings geführt; aufgrund seiner Führungsaufgabe bedarf der zweite Dichtungsring selbst einer Ausrichtung bzw. Verankerung gegenüber dem eigentlichen verdrehbaren Teil. Diese wird erreicht durch einen Steg od. dgl., der an einem der Mulde gegenüberliegenden Umfangsbereich des Querschnitts des zweiten Dichtungsrings angeformt ist und in eine etwa komplementäre, nutförmige Vertiefung in dem betreffenden Oberflächenbereich des verdrehbaren Teils eingesetzt ist.

Der Fixierungssteg des zweiten Dichtungsrings kann an seiner radial innen und/oder außen liegenden Oberfläche querschnittlich hervortretende Erhebungen aufweisen, die seine Elastizität erhöhen und sein vollständiges Eintauchen in eine nutförmige Vertiefung des verdrehbaren Teils einerseits erlauben und andererseits sicherstellen. Diese Erhebungen können wie umlaufende Rippen gestaltet sein, bspw. mit einem wellenförmigen oder sägezahnförmigen Querschnitt od. dgl.

Auch der zweite Dichtungsring kann über eine Dichtlippe verfügen, die an wenigstens einem rundum laufenden Oberflächenbereich angeformt ist. Wenn der zweite Dichtungsring aus einem vulkanisierten, d.h. vernetzten (Kautschuk-) Material besteht, so hat er dauerelastische Eigenschaften, wie sie von einer Dichtlippe gefordert werden. Es bietet sich daher an, auch den zweiten Dichtungsring mit einer Dichtlippe zu versehen, um so mit geringem Aufwand eine Doppel- oder Mehrfachdichtung realisieren zu können.

Eine solche Dichtlippe des zweiten Dichtungsrings kann an einem Oberflächenbereich des gegenüber liegenden, verdrehbaren Teils anliegen. Wenn - wie die Erfindung weiter vorsieht - die zusätzliche Dichtlippe an dem zweiten Dichtungsring innerhalb des von der ersten Dichtlippe abgeschlossenen, vorzugsweise mit Fett od. dgl. Schmiermittel gefüllten Hohlraum liegt, so ist eine Korrosion des mit der zweiten Dichtlippe zusammenwirkenden Oberflächenbereichs des verdrehbaren Teils ausgeschlossen, so dass auch ohne zusätzliche Korrosionsschutzmaßnahmen eine Beschädigung der zweiten Dichtung vermieden ist.

Alternativ und/oder kumulativ zu der zusätzlichen Dichtlippe an dem zweiten Dichtungsring kann ein rundum laufender Oberflächenbereich desselben als Anlagefläche für eine weitere Dichtlippe ausgebildet sein. Eine solche, dritte Dichtung kann außerhalb der aus dem erfindungsgemäßen Band und der daran anliegenden, ersten Dichtlippe gebildeten Hauptdichtung liegen und schützt dann die Hauptdichtung vor mechanischen Einflüssen, bspw. vor Stößen.

Eine besonders einfache Konstruktion ergibt sich, wenn die an einer Anlagefläche des zweiten Dichtungsrings anliegende Dichtlippe an dem ersten Dichtungsring angeformt ist.

Besonders bewährt hat sich eine Anordnung, wobei die der an dem Band anliegenden Dichtlippe gegenüber liegende Rückseite des ersten Dichtungsrings nach außen gewandt oder der Oberfläche des betreffenden Rings zugewandt ist. Ist sie der Oberfläche des betreffenden Rings zugewandt, so kann sie sich dort ggf. abstützen, so dass die Dichtlippe selbst nach Ermüdung noch in dichter Anlage mit dem Band bleibt. Ist sie nach außen gewandt, kann dieser an der Vorderseite die Dichtlippe tragende Bereich leicht mit einem Federelement in Form gehalten werden, das dann - weil von außen zugänglich - jederzeit nachgespannt oder ausgetauscht werden kann, oder sie kann im Rahmen einer Wartung zumindest inspiziert und ggf. manuell wieder in Form gebracht werden. Ist die Rückseite der Dichtlippe dagegen von einem anderen Teil. der Dichtung - ggf. von einem anderen Abschnitt des Dichtungsrings selbst - verdeckt, so kann die korrekte Lage der Dichtlippe bei Wartungsarbeiten kaum kontrolliert geschweige denn korrigiert werden.

Die Erfindung zeichnet sich weiterhin aus durch ein Federelement, das eine Dichtlippe des ersten Dichtungsrings an das Band des zweiten Dichtungsrings preßt. Dadurch kann der Anpreßdruck der Dichtlippe der Hauptdichtung und damit auch deren Dichtungsirkung erheblich gesteigert werden.

Als Federelement eignet sich bspw. ein rundumlaufender Draht od. dgl. Dieser kann große Zugkräfte aufnehmen, die einen weitaus höheren, radialen Anpreßdruck der Dichtlippe zur Folge haben als dieser von der Dichtlippe allein hervorgerufen werden könnte. Um seine Aufgabe gerade auch unter aggressiven Umgebungsbedingungen dauerhaft erfüllen zu können, sollte das Federelement korrosionsfrei sein, bspw. aus einem nichtrostenden Stahl od. dgl. bestehen. Dieses Merkmal ist gerade dann von großer Bedeutung, wenn sich das Federelement außerhalb des abgedichteten Bereichs befindet.

Um Problemen beim Zusammenbau der Dichtung vorzubeugen, kann das Federelement einen etwa kreisförmigen Querschnitt aufweisen, so daß ein versehentliches Verdrillen desselben dessen gleichmäßige Krafteinwirkung nicht beeinträchtigt.

Bevorzugt befindet sich das Federelement an der Rückseite der an dem Band anliegenden Dichtlippe des ersten Dichtungselements. Von dort kann die vorzugsweise radial nach innen wirkende Anpreßkraft genau in Richtung der freien Kante der Dichtlippe wirken, damit sich im Bereich dieser Kante symmetrische Kräfte einstellen und die Verformung der Dichtlippe auf ein Minimum reduziert ist.

Um das Federelement dauerhaft an Ort und Stelle zu halten, sollte es in einer rundumlaufenden, etwa muldenförmigen Vertiefung des ersten Dichtungselements eingelegt sein. Es kann dann nicht verrutschen und wird die Anpreßwirkung der Dichtlippe auch noch nach einer sehr langen Betriebsdauer unterstützen. Sofern diese Mulde sich außerhalb des abgedichteten Bereichs befindet, ist das Federelement von außen zugänglich und kann leicht nach Einsetzen der übrigen Dichtungselemente eingebaut und/oder später zu Wartungszwecken ausgebaut und ggf. ersetzt und/oder nachgespannt werden.

Aus Sicherheitsgründen empfiehlt die Erfindung, dass die Mulde in dem ersten Dichtungselement zur Aufnahme des Federelements einem kreisförmigen Querschnitt folgt, vorzugsweise entlang eines querschnittlichen Umfangswinkels von mehr als 180°. Solchenfalls kann sich das Federelement auch bei stärksten Vibrationen nicht aus dieser Mulde lösen.

Bei einer Anordnung des Federelements etwa in einer gemeinsamen Ebene mit der freien Kante der Dichtlippe liegen die beiden Ränder der das Federelement aufnehmenden Mulde zu beiden Seiten dieser Ebene. Wenigstens einer der beiden Muldenränder in dem ersten Dichtungselement eignet sich zur Fixierung des ersten Dichtungsrings, indem er von der ersten Dichtlippe weg querschnittlich verlängert ist. Der solchenfalls nach rückwärts überstehende Randbereich kann an seinem freien Ende mit einem Steg od. dgl. versehen sein, der zur Verankerung des ersten Dichtungsrings in eine etwa komplementäre, nutförmige Vertiefung in dem betreffenden Oberflächenbereich des verdrehbaren Teils eingesetzt ist. Die Nut zur Aufnahme eines solchen Stegs muß sich nicht an der Mantelfläche des betreffenden Drehteils befinden, sondern kann auch in eine Stirnfläche desselben eingearbeitet sein.

Wie der Befestigungssteg an dem zweiten Dichtungsring, so kann auch der des ersten Dichtungsrings querschnittlich hervortretende, vorzugsweise wellen- oder widerhakenförmige Erhebungen aufweisen, um seine Elastizität zu erhöhen.

Die erfindungsgemäße Konstruktion erfährt eine weitere Optimierung dadurch, dass die Spitze des Querschnitts der an dem Band anliegenden Dichtlippe des ersten Dichtungselements etwa auf der geraden Verbindungslinie zwischen den Mittelpunkten der beiden Mulden zur Aufnahme des Bandes einerseits und des Federelements andererseits liegt. Solchenfalls werden die Anpreßkräfte innerhalb einer einzigen Ebene von dem Federelement über die freie Kante der Dichtlippe auf den mittleren Bereich des erfindungsgemäßen Bandes übertragen, ohne dass hierbei unsymmetrische Verformungen der Dichtlippe und/oder des zweiten Dichtungsrings zu befürchten sind.

Es liegt im Rahmen der Erfindung, dass die an dem Band anliegende Dichtlippe des ersten Dichtungselements einen Querschnitt mit einer stumpfwinkligen Spitze aufweist. Eine solche stumpfwinklige Spitze ist nur wenig anfällig für unerwünschte Verformungen und kann daher auch sehr große Anpreßkräfte über einen Zeitraum von vielen Jahren hinweg ertragen und auf das erfindungsgemäße Band ausüben.

Bevorzugt zeichnet sich die Erfindung schließlich durch einen dritten Dichtungsring aus, der an einem der gegeneinander verdrehbaren Teile festgelegt ist und eine Dichtlippe aufweist, die an dem anderen der gegeneinander verdrehbaren Teile anliegt. Auch dieser Dichtungsring kann an seinem der Dichtlippe gegenüber liegenden Querschnittsbereich mit einem angeformten Steg od. dgl. versehen sein, der zu seiner Verankerung in eine etwa komplementäre, nutförmige Vertiefung in dem betreffenden Oberflächenbereich des verdrehbaren Teils eingesetzt ist. Auch dieser Befestigungssteg kann querschnittlich hervortretende, vorzugsweise haken- oder widerhakenartige Erhebungen aufweisen.

Weitere Merkmale, Eigenschaften, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen Schnitt durch ein Kugellager mit einer erfindungsgemäßen Dichtung;
- Fig. 2: die Dichtung aus Fig. 1 in einer größeren Darstellung; sowie
- Fig. 3: eine andere Ausführungsform der Erfindung in einer der Fig. 2 entsprechenden Darstellung.

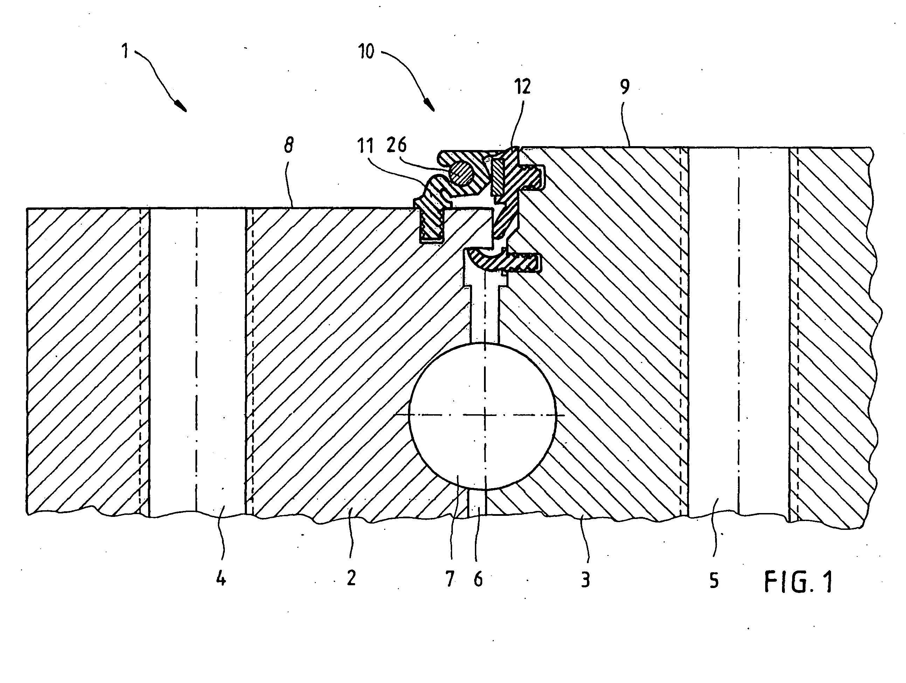

Das Kugellager 1 aus Fig. 1 besteht aus zwei konzentrischen, gegeneinander verdrehbaren Ringen. In Fig. 1 ist links der Außenring 2, rechts der Innenring 3 zu sehen. Beide Ringe 2, 3 sind von zu der Drehachse parallelen Befestigungsbohrungen 4, 5 durchsetzt. In dem Bereich des Spaltes 6 zwischen den zwei Ringen 2, 3 sind Laufbahnen für wenigstens eine Reihe von kugelförmigen Wälzkörpern 7 vorgesehen, welche die gegenseitige Verdrehung der beiden Ringe 2, 3 als einzigen Freiheitsgrad der Bewegung erlauben. Bei dem Kugellager 1 sollen die in Fig. 1 oben liegenden Stirnflächen 8, 9 der Witterung ausgesetzt sein. Aus diesem Grund ist der Spalt 6 zwischen den beiden Stirnflächen 8, 9 mit einer erfindungsgemäßen Dichtung 10 abgedichtet.

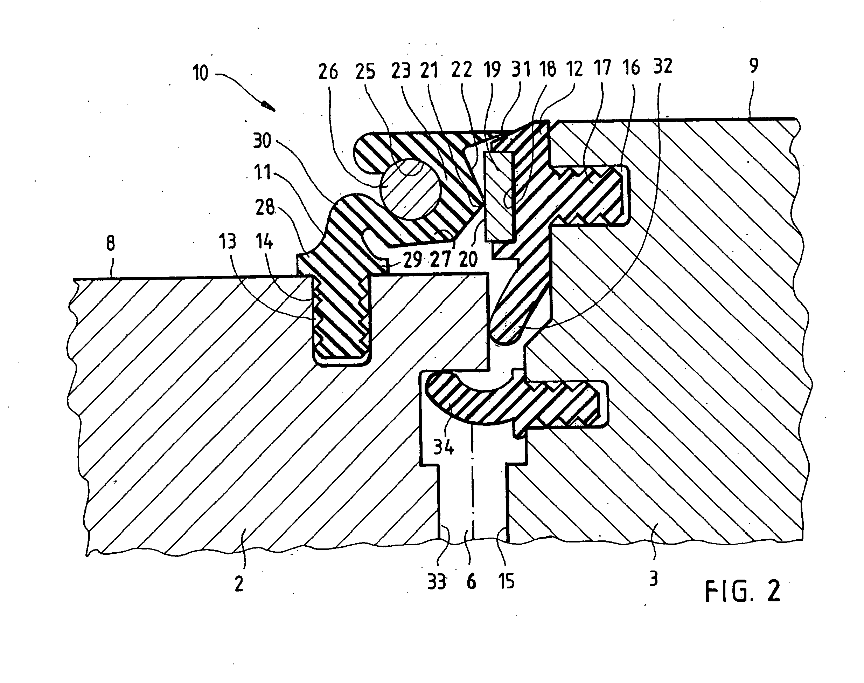

Wie Fig. 2 zeigt, besteht die Dichtung 10 aus einem ersten Dichtungsring 11 und aus einem zweiten Dichtungsring 12, jeweils aus vulkanisiertem Material, bspw. vulkanisiertem Natur- oder Synthetik-Kautschuk. Der erste Dichtungsring 11 ist an dem Außenring 2 fixiert, der zweite Dichtungsring 12 an dem Innenring 3. Zu diesem Zweck ist in der Stirnseite 1 des Außenrings 1 eine rundumlaufende, nutförmige Vertiefung 13 vorgesehen, in die ein ringförmiger Fortsatz 14 des ersten Dichtungsrings 11 eingreift; ebenso ist in der dem Spalt 6 zugewandten Mantelseite 15 des Innenrings 3 eine ebenfalls rundumlaufende, nutförmige Vertiefung 16 vorhanden, die der Aufnahme eines ringförmigen Fortsatzes 17 an dem zweiten Dichtungsring 12 dient.

Der solchermaßen an dem Innenring 3 fixierte, zweite Dichtungsring 12 trägt an seiner dem Fortsatz 17 gegenüberliegenden Seite eine ringförmige, relativ flache, muldenförmige Vertiefung 18, bspw. mit nutförmigem Querschnitt. In dieser Vertiefung ist ein rundumlaufendes Metallband 19 eingelegt, das durch die rundumlaufenden Ränder der Mulde 18 umgriffen und dadurch vor einer zu der Drehachse des Drehlagers 1 parallelen Verschiebung bewahrt wird.

An der der Mulde 18 gegenüberliegenden Außenseite 20 des Metallbandes 19 liegt eine Dichtlippe 21 des ersten Dichtungsrings 11 an. Die Dichtlippe 21 kann durch eine Kante mit einem stumpfen Öffnungswinkel gebildet sein, also bspw. einem Öffnungswinkel zwischen 90° und 150°. Damit diese Dichtlippe 21 auch bei nachlassender Elastizität des Dichtungsrings 11 fest an die Anlagefläche 20 des Metallbandes 19 gepreßt wird, ist die Dichtlippe 21 an der Innenseite 22 eines etwa hülsenförmigen Abschnittes 23 des äußeren Dichtungsringes 11 angeordnet. Die radial außen liegenden Mantelfläche 24 dieses hülsenförmigen Abschnitts 23, also die der Dichtlippe 21 gegenüberliegende Rückseite 24 des Dichtrings 11, ist bei der Ausführungsform nach Fig. 1 und 2 nach außen gewandt, so dass die korrekte Lage der Dichtlippe 21 leicht an der Position ihrer Rückseite 24 überprüft werden kann.

An ihrer radial außen liegenden Mantelfläche 24 ist dieser hülsenförmige Abschnitt 23 außerdem mit einer rundumlaufenden Mulde 25 versehen, in die eine Metallfeder 26 eingelegt ist, welche bestrebt ist, den hülsenförmigen Abschnitt 23 und damit die an diesem vorgesehene Dichtlippe 21 beständig gegen das Metallband 19 zu pressen. Bei dem Federelement 26 handelt es sich bevorzugt um eine Zugfeder, ggf. mit Schraubnippel zur Verbindung der beiden Federenden. Eine solchermaßen ringförmig geschlossene Zugfeder kann eine maximale Zugspannung erzeugen.

Mit dem der Stirnfläche 8 des Außenrings 2 näher liegenden Rand 27 der Mulde 25 ist der rundumlaufende Befestigungsfortsatz 14 verbunden. Zu diesem Zweck ist der Rand 27 der Mulde 25 zur Stirnfläche 8 hin umgebogen. Zwei seitliche, einander gegenüberliegende Bünde 28, 29 stützen sich jeweils auf den Rändern der nutförmigen Vertiefung 13 in der Stirnseite 8 ab, während der Fortsatz 14 vollständig in diese Vertiefung 13 hineinragt. Indem die Umbiegung 30 zwischen dem Rand 27 der Mulde 25 und dem Fortsatz 14 die Metallfeder 26 radial außen bereichsweise umgreift, kann sie eine zentrierende Wirkung auf die Metallfeder 26 und damit auch auf die Dichtlippe 21 der Hauptdichtung 19, 21 ausüben. Zum Einlegen, Nachspannen und/oder Austauschen der Metallfeder 26 ist die Mulde 25 - zusammen mit der Rückseite 24 des Dichtungsrings 11 - nach außen offen; die Mulde 25 wird vorzugsweise nicht durch einen anderen Teil des Dichtungsrings 11 abgedeckt, so dass die Metallfeder 26 von außen gut zugänglich ist. Zum Schutz vor Korrosion sollte die Metallfeder 26 daher aus einem nichtrostenden Material gefertigt sein.

Eine im Bereich der oberen, der Witterung ausgesetzten Stirnfläche des Dichtungsrings 11 ist eine zweite Dichtlippe 31 vorgesehen, die das Metallband 19 außen bzw. oben umgreift und jenseits desselben an dem zweiten, inneren Dichtungsring 12 anliegt und Schlagregen, aber auch sonstige Einwirkungen, bspw. Stöße, von der Hauptdichtung 19, 21 fernhalten soll.

An dem zweiten, inneren Dichtungsring 12 kann außerdem innerhalb, d.h., unterhalb der Mulde 18 für das Metallband 19, eine etwa radial nach außen ragende Dichtlippe 32 vorgesehen sein, die sich auf einer dem Spalt 6 zugewandten Mantelseite 33 des äußeren Lagerrings 2 abstützt. Diese innenliegende Dichtlippe 32 dient - wie ein ggf. vorhandener, dritter, noch weiter innen angeordneter Dichtungsring 34 - vorwiegend der Rückhaltung des Schmierfettes innerhalb des Spaltes 6.

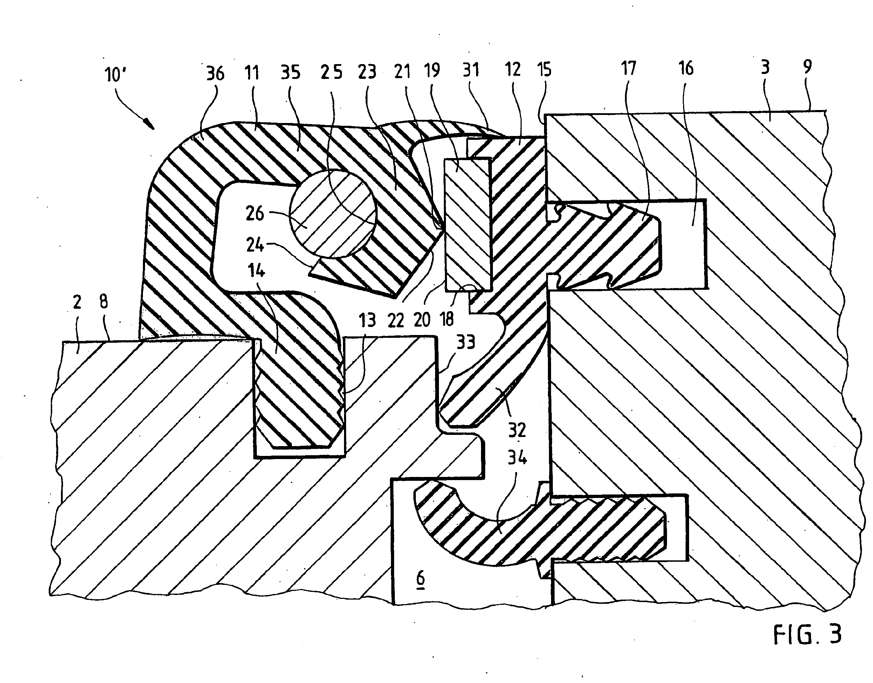

Die Ausführungsform 10' gemäß Fig. 3 unterscheidet sich von derjenigen aus Fig. 1 und 2 vor allem dadurch, dass dort der Befestigungsfortsatz 14 des ersten Dichtungsrings 11, der in eine rundumlaufende, nutförmige Vertiefung 13 in der Stirnseite 8 des Außenrings 2 eingreift, nicht mit dem dieser Stirnseite 8 näherliegenden Rand 27 der Mulde 25 für die Metallfeder 26 verbunden ist, sondern mit dem von diese Stirnseite 8 weiter entfernten Muldenrand 35, ebenfalls über eine Umbiegung 36. Dadurch gelangt die Metallfeder 26 in den von der Hauptdichtung 19, 21 abgeschlossenen Hohlraum und ist äußeren Einwirkungen entzogen; die Rückseite 24 der Dichtlippe 21 ist weder nach außen gewandt noch der Oberfläche 8 des Rings 2 zugewandt. Bei dieser Ausführungsform wird die Metallfeder 26 nur zusammen mit dem ersten Dichtungsring 11 ausgetauscht; bei der Ausführungsform nach Fig. 1 und 2 könnte dieser auch getrennt von dem ersten Dichtungsring 11 ausgetauscht werden.

## Patentansprüche

1. Windenergieanlage, umfassend wenigstens ein Blattlager (1) mit zwei konzentrischen, gegeneinander verdrehbaren Ringen (2,3), welche beide zu der Drehachse parallele Befestigungsbohrungen (4,5) aufweisen sowie einen gegenseitigen Spalt (6), in welchem Laufbahnen für wenigstens eine Wälzkörperreihe (7) vorgesehen sind, und welcher mit einer Dichtung (10) abgedichtet ist, bestehend aus wenigstens einem ersten Dichtungsring (11) aus einem elastischen, vorzugsweise dauerelastischen Werkstoff, der an einem der beiden gegeneinander verdrehbaren Teile (2,3) fixiert ist und wenigstens eine Dichtlippe (21) aufweist, und aus wenigstens einem zweiten Dichtungsring (12), der an dem anderen der gegeneinander verdrehbaren Teile (2,3) fixiert ist, **dadurch gekennzeichnet, dass** der zweite Dichtungsring (12) ein an seinem Umfang entlang laufendes Band (19) aus einem anderen Werkstoff trägt, an dem wenigstens eine Dichtlippe (21) des ersten Dichtungsrings (11) anliegt.

2. Windenergieanlage nach Anspruch 1, **dadurch gekennzeichnet, dass** das Material des zweiten Dichtungsrings (12) einen höheren spezifischen elektrischen Widerstand p aufweist als das von diesem getragene Band (19).

3. Windenergieanlage nach Anspruch 1 oder 2, **dadurch gekennzeichnet, dass** das Material des zweiten Dichtungsrings (12) einen spezifischen elektrischen Widerstand p von mehr als 10³ Ωm aufweist, insbesondere von mehr als 10⁶ Ωm.

4. Windenergieanlage nach einem der vorhergehenden Ansprüche, **dadurch gekennzeichnet, dass** das Band (19) aus Metall besteht, insbesondere aus einem edlen oder veredelten Metall, bspw. Edelstahl.

5. Windenergieanlage nach einem der vorhergehenden Ansprüche, **dadurch gekennzeichnet, dass** das Material des Bandes (19) einen geringeren Reibungskoeffizient µ aufweist als der zweite Dichtungsring (12) selbst.

6. Windenergieanlage nach einem der vorhergehenden Ansprüche, **dadurch gekennzeichnet, dass** der als Anlagefläche für eine Dichtlippe (21) des ersten Dichtungsrings (11) dienende Oberflächenbereich (20) des Bandes (19) geglättet ist, bspw. poliert.

7. Windenergieanlage nach einem der vorhergehenden Ansprüche, **dadurch gekennzeichnet, dass** der als Anlagefläche für eine Dichtlippe (21) des ersten Dichtungsrings (11) dienende Oberflächenbereich (20) des Bandes (19) etwa einer Rotationsfläche folgt, insbesondere einer Zylindermantelfläche.

8. Windenergieanlage nach einem der vorhergehenden Ansprüche, **dadurch gekennzeichnet, dass** das umlaufende Band (19) als geschlossener Ring ausgebildet ist.

9. Windenergieanlage nach Anspruch 8, **dadurch gekennzeichnet, dass** das umlaufende Band (19) einen konstanten Querschnitt aufweist.

10. Windenergieanlage nach Anspruch 9, **dadurch gekennzeichnet, dass** das Band (19) einen etwa rechteckigen Querschnitt aufweist.

11. Windenergieanlage nach einem der vorhergehenden Ansprüche, **dadurch gekennzeichnet, dass** das umlaufende Band (19) derart an dem zweiten Dichtungsring (12) fixiert ist, dass kein Kontakt zu irgendeinem der beiden gegeneinander verdrehbaren Teile (2,3) besteht.

12. Windenergieanlage nach Anspruch 11, **dadurch gekennzeichnet, dass** das umlaufende Band (19) in einer umlaufenden, muldenförmigen Vertiefung (18) des zweiten Dichtungsrings (12) aufgenommen ist.

13. Windenergieanlage nach Anspruch 12, **dadurch gekennzeichnet, dass** die Tiefe der das umlaufende Band (19) aufnehmenden Mulde (18) in dem zweiten Dichtungsring (12) kleiner ist als die entsprechende Höhe des darin eingelegten Bandes (19).

14. Windenergieanlage nach Anspruch 12 oder 13, **dadurch gekennzeichnet, dass** der Boden der das umlaufende Band (19) aufnehmenden Mulde (18) in dem zweiten Dichtungsring (12) etwa parallel zu demjenigen Oberflächenbereich (15) eines verdrehbaren Teils (3) verläuft, an dem der zweite Dichtungsring (12) festgelegt ist.

15. Windenergieanlage nach einem der Ansprüche 12 bis 14**, dadurch gekennzeichnet, dass** an dem der Mulde (18) gegenüberliegenden Umfangsbereich des Querschnitts des zweiten Dichtungsrings (12) ein Steg (17) od. dgl. angeformt ist, der zur Verankerung des zweiten Dichtungsrings (12) in eine etwa komplementäre, nutförmige Vertiefung (16) in dem betreffenden Oberflächenbereich (15) des verdrehbaren Teils (3) eingesetzt ist.

16. Windenergieanlage nach Anspruch 15, **dadurch gekennzeichnet, dass** der Steg (17) an dem der Mulde (18) gegenüberliegenden Querschnittsbereich des Dichtungsrings (12) querschnittlich hervortretende, vorzugsweise wellen-, zahn-, sägezahn-, haken- oder widerhakenförmige Erhebungen aufweist.

17. Windenergieanlage nach einem der vorhergehenden Ansprüche, **dadurch gekennzeichnet, dass** an wenigstens einem rundum laufenden Oberflächenbereich des zweiten Dichtungsrings (12) wenigstens eine Dichtlippe (28) angeformt ist.

18. Windenergieanlage nach Anspruch 17, **dadurch gekennzeichnet, dass** wenigstens eine Dichtlippe (32) des zweiten Dichtungsrings (12) an einem Oberflächenbereich (33) des gegenüber liegenden, verdrehbaren Teils anliegt.

19. Windenergieanlage nach einem der vorhergehenden Ansprüche, **dadurch gekennzeichnet, dass** wenigstens ein rundum laufender Oberflächenbereich des zweiten Dichtungsrings (12) als Anlagefläche für eine weitere Dichtlippe (31) ausgebildet ist.

20. Windenergieanlage nach Anspruch 19, **dadurch gekennzeichnet, dass** die an einer Anlagefläche des zweiten Dichtungsrings (12) anliegende Dichtlippe (31) an dem ersten Dichtungsring (11) angeformt ist.

21. Windenergieanlage nach einem der vorhergehenden Ansprüche, **dadurch gekennzeichnet, dass** die der an dem Band (19) anliegenden Dichtlippe (21) gegenüber liegende Rückseite (24,25) des ersten Dichtungsrings (11) von außen zugänglich oder der Oberfläche (8) des betreffenden Rings (2) zugewandt ist.

22. Windenergieanlage nach einem der vorhergehenden Ansprüche, **gekennzeichnet durch** ein Federelement (26), das eine Dichtlippe (21) des ersten Dichtungsrings (11) an das Band (19) des zweiten Dichtungsrings (12) preßt.

23. Windenergieanlage nach Anspruch 22, **dadurch gekennzeichnet, dass** sich das Federelement (26) an der Rückseite (26) der an dem Band (19) anliegenden Dichtlippe (21) des ersten Dichtungselements (11) befindet.

24. Windenergieanlage nach Anspruch 22 oder 23, **dadurch gekennzeichnet, dass** das Federelement (26) als rundumlaufender Draht od. dgl. ausgebildet ist.

25. Windenergieanlage nach einem der Ansprüche 22 bis 24, **dadurch gekennzeichnet, dass** das Federelement (26) einen etwa kreisförmigen Querschnitt aufweist.

26. Windenergieanlage nach einem der Ansprüche 22 bis 25, **dadurch gekennzeichnet, dass** das Federelement (26) in einer rundumlaufenden, etwa muldenförmigen Vertiefung (25) des ersten Dichtungselements (11) eingelegt ist.

27. Windenergieanlage nach Anspruch 26, **dadurch gekennzeichnet, dass** die Mulde (25) in dem ersten Dichtungselement (11) zur Aufnahme des Federelements (26) einem kreisförmigen Querschnitt folgt, vorzugsweise entlang eines querschnittlichen Umfangswinkels von mehr als 180°.

28. Windenergieanlage nach Anspruch 26 oder 27, **dadurch gekennzeichnet, dass** einer der beiden Muldenränder (27,35) in dem ersten Dichtungselement (11) von der ersten Dichtlippe (21) weg querschnittlich verlängert ist.

29. Windenergieanlage nach Anspruch 28, **dadurch gekennzeichnet, dass** an dem freien Ende des querschnittlich verlängerten Muldenrandes (27,35) ein Steg (14) od. dgl. angeformt ist, der zur Verankerung des ersten Dichtungsrings (11) in eine etwa komplementäre, nutförmige Vertiefung (13) in dem betreffenden Oberflächenbereich (8) des verdrehbaren Teils (2) eingesetzt ist.

30. Windenergieanlage nach Anspruch 29, **dadurch gekennzeichnet, dass** der Befestigungssteg (14) an dem ersten Dichtungsring (11) querschnittlich hervortretende, vorzugsweise wellen-, zahn-, sägezahn-, haken- oder widerhakenförmige Erhebungen aufweist.

31. Windenergieanlage nach einem der Ansprüche 26 bis 30, **dadurch gekennzeichnet, dass** die Spitze des Querschnitts der an dem Band (19) anliegenden Dichtlippe (21) des ersten Dichtungselements (11) etwa auf der geraden Verbindungslinie zwischen den Mittelpunkten der beiden Mulden (18,25) zur Aufnahme des Bandes (19) einerseits und des Federelements (26) andererseits liegt.

32. Windenergieanlage nach einem der vorhergehenden Ansprüche, **dadurch gekennzeichnet, dass** die an dem Band (19) anliegende Dichtlippe (21) des ersten Dichtungselements (11) einen Querschnitt mit einer stumpfwinkligen Spitze aufweist.

33. Windenergieanlage nach einem der vorhergehenden Ansprüche, **gekennzeichnet durch** einen dritten Dichtungsring (34), der an einem der gegeneinander verdrehbaren Teile (2,3) festgelegt ist und eine Dichtlippe aufweist, die an dem anderen der gegeneinander verdrehbaren Teile (2,3) anliegt.

34. Windenergieanlage nach Anspruch 33, **dadurch gekennzeichnet, dass** an dem der Dichtlippe gegenüber liegenden Querschnittsbereich des dritten Dichtungsrings (34) ein Steg od. dgl. angeformt ist, der zur Verankerung des dritten Dichtungsrings in eine etwa komplementäre, nutförmige Vertiefung in dem betreffenden Oberflächenbereich des verdrehbaren Teils eingesetzt ist.

35. Windenergieanlage nach Anspruch 34, **dadurch gekennzeichnet, dass** der Befestigungssteg an dem dritten Dichtungsring (34) querschnittlich hervortretende, vorzugsweise wellen-, zahn-, sägezahn-, haken- oder widerhakenförmige Erhebungen aufweist.

## Claims

1. Wind energy system comprising at least one pitch bearing (1) with two concentric rings (2, 3) that can be rotated relative to one another, both of which have fastening holes (4, 5) parallel to the axis of rotation and an opposite gap (6) in which raceways for at least one row of rollers (7) are provided, and which is sealed with a seal (10) consisting of at least one first sealing ring (11) consisting of an elastic material, preferably a permanently elastic material, that is fixed to one of the two parts (2, 3) that can be rotated in relation to one another and that has at least one sealing lip (21), and at least one second sealing ring (12), which is fixed to the other of the two parts (2,3) that can be rotated in relation to one another, **characterized in that** the second sealing ring (12) carries a strip (19) consisting of another material that runs along its periphery, on which lies at least one sealing lip (21) of the first sealing ring (11).

2. Wind energy system according to claim 1, **characterized in that** the material of the second sealing ring (12) has a higher specific electrical resistance p than the strip (19) it supports.

3. Wind energy system according to claim 1 or 2, **characterized in that** the material of the second sealing ring (12) has a specific electrical resistance p of more than 10³ Ωm, especially more than 10⁶ Ωm.

4. Wind energy system according to one of the preceding claims, **characterized in that** the strip (19) consists of metal, especially of a noble metal or a refined metal, for example stainless steel.

5. Wind energy system according to one of the preceding claims, **characterized in that** the material of the strip (19) has a lower coefficient of friction p than the second sealing ring (12) itself.

6. Wind energy system according to one of the preceding claims, **characterized in that** the surface area (20) of the strip (19) used as a contact surface for a sealing lip (21) of the first sealing ring (11) is smoothed, for example polished.

7. Wind energy system according to one of the preceding claims, **characterized in that** the surface area (20) of the strip (19) used as a contact surface for a sealing lip (21) of the first sealing ring (11) somewhat follows a surface of rotation, especially a cylindrical envelope surface.

8. Wind energy system according to one of the preceding claims, **characterized in that** the encircling strip (19) is made as a closed ring.

9. Wind energy system according to claim 8, **characterized in that** the encircling strip (19) has a constant cross section.

10. Wind energy system according to claim 9, **characterized in that** the strip (19) has a somewhat rectangular cross section.

11. Wind energy system according to one of the preceding claims, **characterized in that** the encircling strip (19) is fixed to the second sealing ring (12) in such a way that no contact exists with either of the two parts (2, 3) that can be rotated in relation to one another.

12. Wind energy system according to claim 11, **characterized in that** the encircling strip (19) is held in an encircling trough-shaped recess (18) in the second sealing ring (12).

13. Wind energy system according to claim 12, **characterized in that** the depth of the trough (18) in the second sealing ring (12) that holds the encircling strip (19) is less than the corresponding height of the strip (19) laid in it.

14. Wind energy system according to claim 12 or 13, **characterized in that** the bottom of the trough (18) in the second sealing ring (12) that holds the encircling strip (19) runs roughly parallel to the surface area (15) of a rotatable part (3) to which the second sealing ring (12) is fastened.

15. Wind energy system according to one of the claims 12 to 14, **characterized in that** a stud (17) or the like is formed onto the peripheral area of the cross section of the second sealing ring (12) opposite the trough (18), which is used to anchor the second sealing ring (12) in a somewhat complementary groove-like recess (16) in the relevant surface area (15) of the rotatable part (3).

16. Wind energy system according to claim 15, **characterized in that** the stud (17) has wavelike, tooth-like, sawtooth-shaped, hook-like, or barbed projections standing out from the cross section on the cross-sectional area of the sealing ring (12) opposite the trough (18).

17. Wind energy system according to one of the preceding claims, **characterized in that** at least one sealing lip (28) is formed onto at least one encircling surface area of the second sealing ring (12).

18. Wind energy system according to claim 17, **characterized in that** at least one sealing lip (32) of the second sealing ring (12) is supported on a surface area (33) of the opposite rotatable part.

19. Wind energy system according to one of the preceding claims, **characterized in that** at least one encircling surface area of the second sealing ring (12) is made as a contact surface for another sealing lip (31).

20. Wind energy system according to claim 19, **characterized in that** the sealing lip (31) contacting a contact surface of the second sealing ring (12) is formed onto the first sealing ring (11).

21. Wind energy system according to one of the preceding claims, **characterized in that** the back (24, 25) of the first sealing ring (11) opposite the sealing lip (21) contacting the strip (19) is accessible from the outside of faces the surface (8) of the relevant ring (2).

22. Wind energy system according to one of the preceding claims, **characterized by** a spring element (26) that presses a sealing lip (21) of the first sealing ring (11) against the strip (19) of the second sealing ring (12).

23. Wind energy system according to claim 22, **characterized in that** the spring element (26) is on the back (26) of the sealing lip (21) of the first sealing element (11) contacting the strip (19).

24. Wind energy system according to claim 22 or 23, **characterized in that** the spring element (26) is made as an encircling wire or the like.

25. Wind energy system according to one of the claims 22 to 24, **characterized in that** the spring element (26) has a roughly circular cross section.

26. Wind energy system according to one of the claims 22 to 25, **characterized in that** the spring element (26) is laid in a somewhat trough-shaped encircling recess (25) in the first sealing element (11).

27. Wind energy system according to claim 26, **characterized in that** the trough (25) in the first sealing element (11) to hold the spring element (26) follows a circular cross section, preferably along a cross-sectional circumferential angle of more than 180°.

28. Wind energy system according to claim 26 or 27, **characterized in that** one of the two trough edges (27, 35) in the first sealing element (11) is lengthened cross-sectionally away from the first sealing lip (21).

29. Wind energy system according to claim 28, **characterized in that** a stud (14) or the like is formed on the free end of the cross-sectionally lengthened trough edge (27, 35), which is used to anchor the first sealing ring (11) in a somewhat complementary groove-like recess (13) in the relevant surface area (8) of the rotatable part (2).

30. Wind energy system according to claim 29, **characterized in that** the fastening stud (14) on the first sealing ring (11) has preferably wavelike, tooth-like, sawtooth-shaped, hook-like, or barbed projections standing out cross-sectionally.

31. Wind energy system according to one of the claims 26 to 30, **characterized in that** the tip of the cross section of the sealing lip (21) of the first sealing element (11) contacting the strip (19) lies somewhat on the straight line connecting the centers of the two troughs (18, 25) for holding the strip (19) on the one hand, and the spring element (26) on the other hand.

32. Wind energy system according to one of the preceding claims, **characterized in that** the sealing lip (21) of the first sealing element (11) contacting the strip (19) has a cross section with an obtuse-angled tip.

33. Wind energy system according to one of the preceding claims, **characterized by** a third sealing ring (34) that is fastened to one of the parts (2, 3) that can be rotated in relation to one another, and has a sealing lip that contacts the other of the two parts (2, 3) that can be rotated in relation to one another.

34. Wind energy system according to claim 33, **characterized in that** a stud or the like is formed on the cross-sectional area of the third sealing ring (34) opposite the sealing lip, which is used to anchor the third sealing ring in a somewhat complementary groove-like recess in the relevant surface area of the rotatable part.

35. Wind energy system according to claim 34, **characterized in that** the fastening stud on the third sealing ring (34) has preferably wavelike, tooth-like, sawtooth-shaped, hook-like, or barbed projections standing out cross-sectionally.

## Revendications

1. Installation éolienne comprenant au moins un support de pales (1) avec deux bagues concentriques avec possibilité de rotation l'une par rapport à l'autre (2, 3), lesquelles présentent toutes les deux des trous de fixation (4, 5) parallèles à l'axe de rotation ainsi qu'une fente (6) mutuelle dans laquelle des pistes de roulement sont prévues pour au moins une série d'éléments roulants (7), et dont l'étanchéité est assurée par un joint (10), comprenant au moins une première bague d'étanchéité (11) en un matériau élastique, de préférence à élasticité permanente, qui est fixée sur l'un des deux éléments (2, 3) à rotation l'un par rapport à l'autre et qui présente au moins une lèvre d'étanchéité (21), ainsi qu'au moins une deuxième bague d'étanchéité (12) qui est fixée sur l'autre des éléments (2, 3) à rotation les uns par rapport aux autres, **caractérisée en ce que** la deuxième bague d'étanchéité (12) porte une bande continue (19) réalisée en un autre matériau le long de son pourtour sur laquelle s'applique au moins une lèvre d'étanchéité (21) de la première bague d'étanchéité (11).

2. Installation éolienne selon la revendication 1, **caractérisée en ce que** le matériau de la deuxième bague d'étanchéité (12) présente une résistance électrique spécifique p plus élevée que la bande portée par celle-ci (19).

3. Installation éolienne selon la revendication 1 ou 2, **caractérisée en ce que** le matériau de la deuxième bague d'étanchéité (12) présente une résistance électrique spécifique p de plus de 10³ Ωm, en particulier de plus de 10⁶ Ωm.

4. Installation éolienne selon l'une des revendications précédentes, **caractérisée en ce que** la bande (19) se compose de métal, en particulier d'un métal noble ou spécial, par exemple un acier spécial.

5. Installation éolienne selon l'une des revendications précédentes, **caractérisée en ce que** le matériau de la bande (19) présente un plus faible coefficient de frottement µ que la deuxième bague d'étanchéité (12) proprement dite.

6. Installation éolienne selon l'une des revendications précédentes, **caractérisée en ce que** la zone de surface (20) de la bande (19) servant de surface d'application à une lèvre d'étanchéité (21) de la première bague d'étanchéité (11) est lissée, par exemple polie.

7. Installation éolienne selon l'une des revendications précédentes, **caractérisée en ce que** la zone de surface (20) de la bande (19) servant de surface d'application à une lèvre d'étanchéité (21) de la première bague d'étanchéité (11) suit approximativement une surface de rotation, en particulier une surface cylindrique.

8. Installation éolienne selon l'une des revendications précédentes, **caractérisée en ce que** la bande circonférentielle (19) est réalisée sous forme de bague fermée.

9. Installation éolienne selon la revendication 8, **caractérisée en ce que** la bande circonférentielle (19) présente une section constante.

10. Installation éolienne selon la revendication 9, **caractérisée en ce que** la bande (19) présente une section approximativement rectangulaire.

11. Installation éolienne selon l'une des revendications précédentes, **caractérisée en ce que** la bande circonférentielle (19) est fixée sur la deuxième bague d'étanchéité (12) de façon telle qu'aucun contact n'existe avec quelconque des deux éléments à rotation les uns par rapport aux autres (2, 3).

12. Installation éolienne selon la revendication 11, **caractérisée en ce que** la bande circonférentielle (19) est logée dans un renfoncement circonférentiel en forme de cavité (18) de la deuxième bague d'étanchéité (12).

13. Installation éolienne selon la revendication 12, **caractérisée en ce que** la profondeur de la cavité (18) recevant la bande circonférentielle (19) dans la deuxième bague d'étanchéité (12) est inférieure à la hauteur correspondante de la bande qui y est insérée (19).

14. Installation éolienne selon la revendication 12 ou 13, **caractérisée en ce que** le fond de la cavité (18) recevant la bande circonférentielle (19) passe dans la deuxième bague d'étanchéité (12) approximativement parallèlement par rapport à la zone de surface (15) d'un élément à rotation (3) sur laquelle la deuxième bague d'étanchéité (12) est fixée.

15. Installation éolienne selon l'une des revendications 12 à 14, **caractérisée en ce qu'**un talon (17) ou sim. est rapporté sur la zone périphérique opposée à la cavité (18) de la section de la deuxième bague d'étanchéité (12), lequel est inséré dans un renfoncement (16) approximativement complémentaire en forme de rainure dans la zone de surface (15) correspondante de l'élément à rotation (3) pour l'ancrage de la deuxième bague d'étanchéité (12).

16. Installation éolienne selon la revendication 15, **caractérisée en ce que** le talon (17) sur la zone de section opposée à la cavité (18) de la bague d'étanchéité (12) présente des parties surélevées transversalement saillantes, de préférence de forme ondulée, dentée, en forme de dent de scie, de crochet ou de barbe.

17. Installation éolienne selon l'une des revendications précédentes, **caractérisée en ce qu'**au moins une lèvre d'étanchéité (28) est rapportée sur au moins une zone de surface entourant la deuxième bague d'étanchéité (12).

18. Installation éolienne selon la revendication 17, **caractérisée en ce qu'**au moins une lèvre d'étanchéité (32) de la deuxième bague d'étanchéité (12) s'applique sur une zone de surface (33) de l'élément à rotation opposé.

19. Installation éolienne selon l'une des revendications précédentes, **caractérisée en ce qu'**au moins une zone de surface entourant la deuxième bague d'étanchéité (12) est réalisée sous forme de surface d'application pour une autre lèvre d'étanchéité (31).

20. Installation éolienne selon la revendication 19, **caractérisée en ce que** la lèvre d'étanchéité (31) appliquée sur une surface d'application de la deuxième bague d'étanchéité (12) est formée sur la première bague d'étanchéité (11).

21. Installation éolienne selon l'une des revendications précédentes, **caractérisée en ce que** la face arrière (24, 25) opposée à la lèvre d'étanchéité (21) appliquée sur la bande (19) de la première bague d'étanchéité (11) est accessible de l'extérieur ou tournée vers la surface (8) de la bague correspondante (2).

22. Installation éolienne selon l'une des revendications précédentes, **caractérisée en ce qu'**un élément élastique (26) presse une lèvre d'étanchéité (21) de la première bague d'étanchéité (11) sur la bande (19) de la deuxième bague d'étanchéité (12).

23. Installation éolienne selon la revendication 22, **caractérisée en ce que** l'élément élastique (26) se trouve sur la face arrière (26) de la lèvre d'étanchéité (21) appliquée sur la bande (19) du premier élément d'étanchéité (11).

24. Installation éolienne selon la revendication 22 ou 23, **caractérisée en ce que** l'élément élastique (26) est réalisé sous forme de fil sur toute la circonférence ou sim.

25. Installation éolienne selon l'une des revendications 22 à 24, **caractérisée en ce que** l'élément élastique (26) présente une section approximativement circulaire.

26. Installation éolienne selon l'une des revendications 22 à 25, **caractérisée en ce que** l'élément élastique (26) est inséré dans un renfoncement (25) circonférentiel approximativement en forme de cavité du premier élément d'étanchéité (11).

27. Installation éolienne selon la revendication 26, **caractérisée en ce que** la cavité (25) dans le premier élément d'étanchéité (11) suit une section circulaire pour le logement de l'élément élastique (26), de préférence le long d'un angle inscrit transversal de plus de 180°.

28. Installation éolienne selon la revendication 26 ou 27, **caractérisée en ce que** l'un des deux bords de cavité (27, 35) est prolongé transversalement dans le premier élément d'étanchéité (11) partant de la première lèvre d'étanchéité (21).

29. Installation éolienne selon la revendication 28, **caractérisée en ce qu'**un talon (14) ou sim. est rapporté sur l'extrémité libre du bord de cavité (27, 35) prolongé transversalement, lequel est inséré dans un renfoncement (13) approximativement complémentaire en forme de rainure dans la zone de surface (8) correspondante de l'élément à rotation (2) pour l'ancrage de la première bague d'étanchéité (11).

30. Installation éolienne selon la revendication 29, **caractérisée en ce que** le talon de fixation (14) présente au niveau de la première bague d'étanchéité (11) des parties surélevées transversalement saillantes, de préférence de forme ondulée, dentée, en forme de dent de scie, de crochet ou de barbe.

31. Installation éolienne selon l'une des revendications 26 à 30, **caractérisée en ce que** l'extrémité de la section de la lèvre d'étanchéité (21) appliquée sur la bande (19) du premier élément d'étanchéité (11) est approximativement sur la ligne de jonction droite entre les centres des deux cavités (18, 25) d'une part pour le logement de la bande (19) et d'autre part de l'élément élastique (26).

32. Installation éolienne selon l'une des revendications précédentes, **caractérisée en ce que** la lèvre d'étanchéité (21) appliquée sur la bande (19) du premier élément d'étanchéité (11) présente une section avec une extrémité à angles obtus.

33. Installation éolienne selon l'une des revendications précédentes, **caractérisée en ce qu'**une troisième bague d'étanchéité (34) est fixée su l'un des éléments à rotation (2, 3) les uns par rapport aux autres et présente une lèvre d'étanchéité qui est appliquée sur un autre des éléments à rotation (2, 3) les uns par rapport aux autres.

34. Installation éolienne selon la revendication 33, **caractérisée en ce qu'**un talon ou sim. est rapporté sur la zone de section opposée à la lèvre d'étanchéité de la troisième bague d'étanchéité (34), lequel est inséré dans un renfoncement approximativement complémentaire en forme de rainure dans la zone de surface correspondante de l'élément à rotation pour l'ancrage de la troisième bague d'étanchéité.

35. Installation éolienne selon la revendication 34, **caractérisée en ce que** le talon de fixation présente au niveau de la troisième bague d'étanchéité (34) des parties surélevées transversalement saillantes, de préférence de forme ondulée, dentée, en forme de dent de scie, de crochet ou de barbe.
